# EUROPEAN PATENT SPECIFICATION

(11) **EP 2 405 444 B1**
(45) Date of publication and mention of the grant of the patent: **17.02.2016**
(21) Application number: 10748707.6
(22) Date of filing: 01.03.2010
(51) Int. Cl.: G21C 9/004, G21C 15/18

(54) **Nuclear reactor containment vessel and method of cooling the nuclear reactor containment vessel**
Kernreaktor-Sicherheitsbehälter und Verfahren zur Kühlung des Kernreaktor-Scherheitsbehälter
Enceinte de confinement de réacteur nucléaire et procédé de refroidissement de l'enceinte de confinement de réacteur nucléaire

(30) Priority: 02.03.2009 JP 2009048348
(43) Date of publication of application: 11.01.2012
(73) Proprietor: Kabushiki Kaisha Toshiba, Minato-ku Tokyo 105-8001 (JP)
(72) Inventor: TAHARA, Mika, Tokyo 105-8001 (JP); NAKAMARU, Mikihide, Tokyo 105-8001 (JP); MURASE, Akira, Tokyo 105-8001 (JP); HAMAZAKI, Ryoichi, Tokyo 105-8001 (JP)
(74) Representative: Kramer Barske Schmidtchen Patentanwälte PartG mbB
(86) International application number: PCT/JP2010/053243
(87) International publication number: WO 2010/101112

(56) References cited:
- JP-A- 6 308 273
- JP-A- 52 110 391
- JP-A- 2000 180 582
- JP-A- 2003 240 888
- JP-A- 2003 240 888
- JP-U- 50 061 299
- US-A- 5 491 730
- US-B1- 6 243 432

## Description

### Technical Field

The present invention relates to a reactor containment vessel cooling technology for maintaining safety of the environment around a reactor by removing decay heat generated when reactor water is accidentally lost, and particularly, to a reactor containment vessel cooling technology for producing emergency cooling water by using water vapor pressure in a reactor containment vessel as a drive force, and the present invention includes a reactor containment vessel cooling system, a reactor containment vessel, and a reactor containment vessel cooling method.

### Background Art

A nuclear reactor includes an emergency core cooling system and a decay heat removing system for maintaining safety of the environment around the reactor by cooling the inside of a reactor containment vessel with water to remove decay heat in case reactor water is accidentally lost. In addition, in consideration of a case where the emergency core cooling system or the decay heat removing system is not activated, a full accident countermeasure guideline has been provided by introducing cooling water from an external water source to the reactor containment vessel to reliably cool the reactor containment vessel.

In a cooling method using an external water source, water vapor and gases are appropriately released into the atmosphere so that the cooling water supplied into the reactor containment vessel does not cause the water vapor pressure in the reactor containment vessel to rise excessively. In the cooling method, fission products and other radioactive nuclides contained in the water vapor and gases to be released into the atmosphere are basically separated in advance, but it is difficult to completely eliminate the possibility of releasing part of the radioactive materials into the atmosphere along with the water vapor and other gases. Therefore, there is an opinion that such a cooling method is not acceptable by the society.

In view of the background described above, there is a reactor containment vessel cooling technology proposed for acquiring water vapor in a reactor pressure vessel by using the water vapor pressure in the reactor containment vessel as a drive force, converting the acquired water vapor into condensate, and cooling the reactor containment vessel with the condensate (see Patent Document 1).

In the reactor containment vessel cooling technology described in Patent Document 1, the following cooling cycle is repeated in a closed area in the reactor containment vessel: acquisition of water vapor, condensation of water vapor, cooling with condensate, and acquisition of water vapor originating from condensate.

Requiring no external water source, the technology will be accepted by the society unlike the method using external water source.

Furthermore, since the reactor containment vessel cooling technology described above requires no pump or other electric drive sources to cool the inside of the reactor containment vessel, the reactor containment vessel can be cooled even in a case where the power supply responsible for the entire nuclear facility is accidentally lost.

### Prior Art Document

### Patent Document

Patent Document 1: Japanese Patent Laid-Open No. 2003-240888

### Non-Patent Document

Non-Patent Document 1: ICONE-6426, M. Akinaga et al., "EVALUATION OF PASSIVE CONTAINMENT COOLING SYSTEM PERFORMANCE DURING SEVERE ACCIDENTS," APPENDIX A, 1998.

Reference is further made to US 6,243,432B1 which discloses a modified passive containment cooling system for a nuclear reactor.

### Description of the Invention

### Problems to be solved by the Invention

When reactor water is accidentally lost, since a large amount of fission products, fuel nuclides, and other radioactive nuclides have been attached to a reactor pressure vessel, decay heat generated by the radioactive nuclides continues to heat the reactor pressure vessel. The reactor pressure vessel, which works as a heat source, therefore increases the temperature of the atmosphere in a reactor containment vessel.

When the temperature in the reactor containment vessel increases, the temperature of water vapor and gases introduced into a reactor containment vessel cooling system increases, resulting in decrease in capability of cooling the reactor containment vessel and faster degradation of the structure of the reactor containment vessel cooling system due to the heat.

The present invention has been made in view of the circumstances of the prior art described above, and an object of the present invention is to provide a reactor containment vessel cooling system, a reactor containment vessel, and a reactor containment vessel cooling method that prevent cooling capability and structural integrity of the reactor containment vessel cooling system from being decreased by lowering or raising the temperature of water vapor and gases acquired by the reactor containment vessel cooling system.

This objective has been achieved by the reactor containment vessel according to claim 1, and the reactor containment vessel cooling method according to claim. Further developments are achieved by the dependent claims.

### Effect of the Invention

The present invention can prevent the cooling capability and structural integrity of a reactor containment vessel cooling system from decreasing by lowering the temperature of water vapor and gases acquired by the reactor containment vessel cooling system.

### Brief Description of the Drawings

[Fig. 1] is a front sectional view showing a first embodiment of a reactor containment vessel cooling system according to the present invention.
[Fig. 2] is an enlarged sectional view of an essential portion of the reactor containment vessel cooling system shown in Fig. 1, including Fig. 2A showing a layout of a condensate drain pipe and Fig. 2B being an enlarged view of an encircled portion P shown in Fig. 2A.
[Fig. 3] is a perspective view of the condensate drain pipe shown in Fig. 2A.
[Fig. 4] is a graph explaining function of the reactor containment vessel cooling system shown in Fig. 1.
[Fig. 5] is a sectional view showing a second embodiment of the reactor containment vessel cooling system according to the present invention.
[Fig. 6] is an enlarged sectional view of an essential portion showing a third embodiment of the reactor containment vessel cooling system according to the present invention.

### Modes for embodying the Invention

Embodiments of a reactor containment vessel cooling system, a reactor containment vessel, and a reactor containment vessel cooling method according to the present invention will be described hereunder with reference to the accompanying drawings. In the following description, it should be understood that the terms "upper," "lower," "right," "left," and other like terms concerning directions are used only based on the illustration on the accompanying drawings or actual installation.

### (First Embodiment)

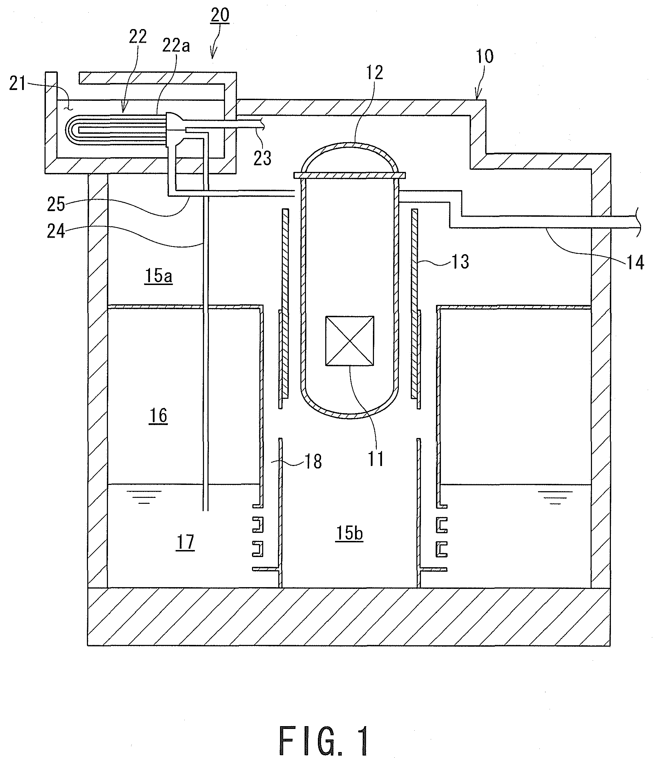

Fig. 1 is a front sectional view showing a first embodiment of a reactor containment vessel cooling system according to the present invention.

A reactor containment vessel cooling system 20 according to the first embodiment is provided inside or outside a reactor containment vessel 10.

The reactor containment vessel 10 is provided so as to surround a reactor pressure vessel 12 that accommodates a core 11, a reactor shielding wall 13 and other reactor structures or components. The reactor containment vessel 10 has a structure capable of preventing fission products from being released into the atmosphere even in a case where a primary steam tube 14 or any other component is broken and hence reactor water in the reactor pressure vessel 12 is lost and a fuel is melt or damaged.

The reactor containment vessel 10 includes a dry well 15 (upper dry well 15a and lower dry well 15b) that forms a space for accommodating the reactor pressure vessel 12 and a suppression chamber (wet well) 16 that is responsible for controlling the internal pressure in the reactor containment vessel 10. The dry well 15 and the suppression chamber 16 communicate with each other via a vent tube 18. The suppression chamber 16 includes a suppression pool 17 that stores emergency cooling water and surrounds the reactor pressure vessel 12.

The reactor containment vessel 10 is provided with an emergency core cooling system and a decay heat removing system (both systems are omitted in Fig. 1), which are activated to remove decay heat generated around the core 11 when the primary steam tube 14 is accidentally broken and hence reactor water is lost. When the emergency core cooling system and a decay heat removing system are activated, the dry well 15 is filled with water vapor originating from the reactor water having leaked out of the reactor pressure vessel 12 through the broken portion of the tube and water vapor originating from the water acquired from the suppression pool 17 by the emergency core cooling system. The water vapor with which the dry well 15 is filled passes through the vent tube 18 and travels into the suppression pool 17, where the water vapor is absorbed and condensed. The increase in internal pressure in the reactor containment vessel 10 is thus reduced.

At this instance, the reactor containment vessel cooling system 20 condenses the water vapor, with which the reactor pressure vessel 12 is filled, into condensate and cools the reactor containment vessel 10 with the condensate in order to reinforce the cooling capability of the emergency core cooling system and a decay heat removing system. The reactor containment vessel cooling system 20 includes, as shown in Fig. 1, a heat exchange pool 21, a heat exchanger 22, a water vapor sucking tube 23, a noncondensable gas vent pipe 24, and a condensate drain pipe 25.

The heat exchange pool 21, which is so provided that it is thermally and spatially set apart from the dry well 15 and the suppression chamber 16 in the reactor containment vessel 10, stores a medium for cooling water vapor with which an upper portion of the upper dry well 15a in the reactor containment vessel 10 is filled. The cooling medium is, for example, light water.

The heat exchanger 22, which includes a heat transfer tube 22a made of a material having excellent heat conductivity, is immersed in the heat exchange pool 21. The heat exchanger 22 allows water vapor introduced into the heat transfer tube 22a to exchange heat with the cooling medium in the heat exchange pool 21 so that the water vapor becomes condensate.

The water vapor sucking tube 23 has a sucking port positioned in the upper dry well 15a, sucks the water vapor with which the upper dry well 15a is filled, and delivers the water vapor into the heat transfer tube 22a. The operation of sucking the water vapor into the water vapor sucking tube 23 is driven by the water vapor pressure in the reactor containment vessel 10.

The noncondensable gas vent pipe 24 extracts a noncondensable gas delivered along with the water vapor into the heat transfer tube 22a out of the heat transfer tube 22a to maintain the heat exchanging capability between the water vapor in the heat transfer tube 22a and the cooling medium in the heat exchange pool 21.

The noncondensable gas vent pipe 24, for example, extends from the exit port of the heat transfer tube 22a, which forms the heat exchanger 22, toward the suppression chamber 16, and the distal end of the noncondensable gas vent pipe 24 is immersed in the suppression pool 17.

The condensate drain pipe 25 extracts the condensate from the heat exchanger 22 and guides and discharges the condensate toward the reactor pressure vessel 12. The operation of extracting and guiding the condensate is driven by the water vapor pressure in the reactor containment vessel 10 and the gravity.

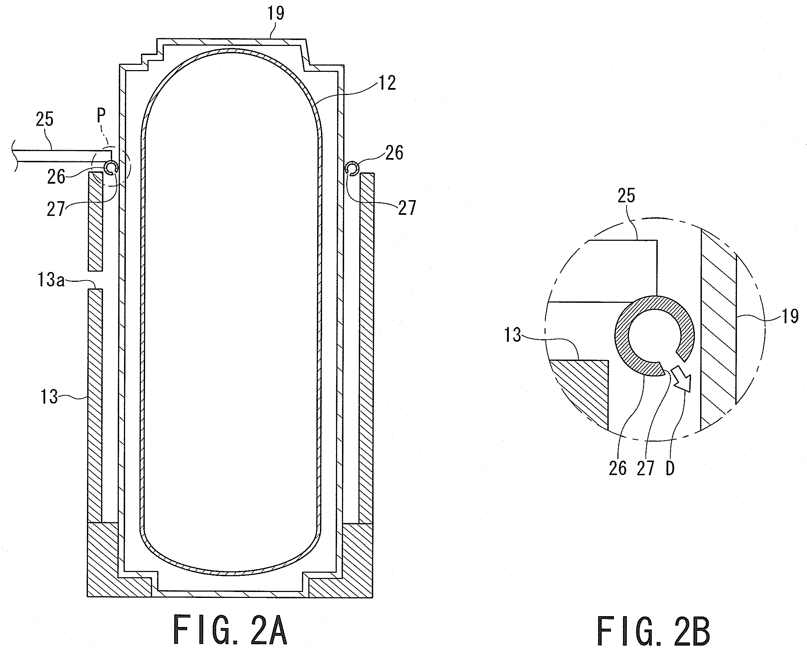

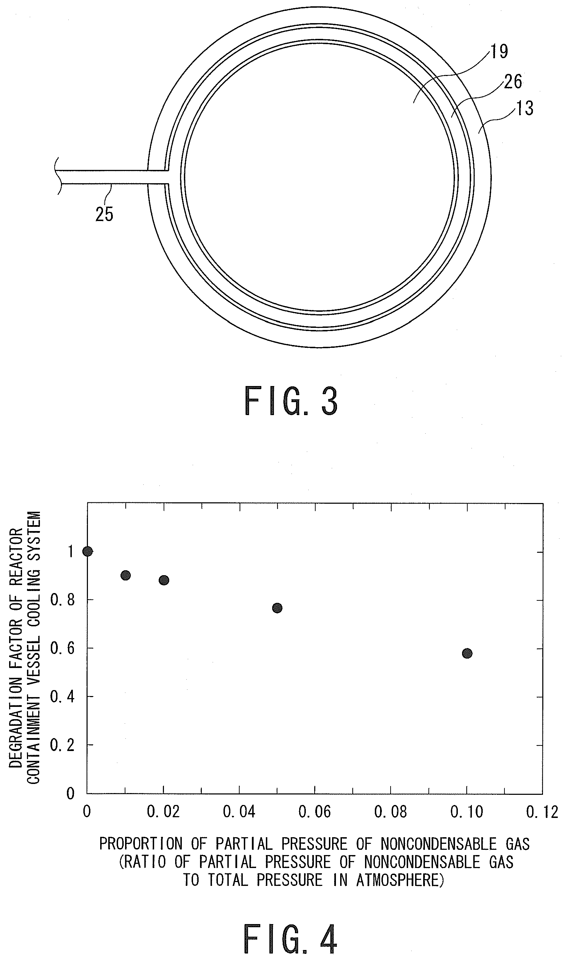

Fig. 2 is an enlarged sectional view of an essential portion of the reactor containment vessel cooling system 20 shown in Fig. 1. Fig. 2A is a cross-sectional view showing the layout of the condensate drain pipe 25. Fig. 2B is an enlarged sectional view of the portion "P" shown in Fig. 2A. Fig. 3 is a perspective view of the condensate drain pipe 25 shown in Fig. 2A.

As shown in Figs. 2A and 3, the distal end of the condensate drain pipe 25 is formed of a ring-shaped header tube 26 which circumferentially surrounds a thermally insulating member 19 that circumferentially covers the reactor pressure vessel 12 and through which the condensate extracted from the heat exchanger 22 flows around the thermally insulating member 19. The thermally insulating member 19, which is made of a metallic material, suppresses heat dissipation from the reactor pressure vessel 12 during normal operation of the reactor.

The header tube 26 has a plurality of discharge ports 27 provided at intervals along the circumferential direction of the header tube 26. The angle and layout of the discharge ports 27 are set so as to face the gap formed between the reactor shielding wall 13 and the thermally insulating member 19 and to discharge the condensate flowing through the header tube 26 at the side surface of the thermally insulating member 19, as shown in Fig. 2B. The symbol D in Fig. 2B represents the direction in which the condensate is discharged from the header tube 26.

The reactor containment vessel cooling system 20 of the structure mentioned above will attain the following functions and effects.

Supposing that a possible severe accident in which the primary steam tube 14 (see Fig. 1) connected to the reactor pressure vessel 12 is broken and a coolant is lost. In this case, the emergency core cooling system and a decay heat removing system are activated, and water vapor originating from the reactor water having leaked from the broken portion of the tube connected to the reactor pressure vessel 12 and water vapor originating from the pooled water discharged from the emergency core cooling system travel to an upper portion of the dry well 15 and fill the upper dry well 15a.

The thus configured reactor containment vessel cooling system 20 according to the present embodiment provides the following advantageous effects:
(1) The reactor containment vessel cooling system 20 includes: the heat exchange pool 21, which is installed apart from the dry well 15 and the suppression chamber 16 in the reactor containment vessel 10 and stores a medium for cooling water vapor; the heat exchanger 22, which is immersed in the heat exchange pool 21, extracts water vapor from the dry well 15 in the reactor containment vessel 10, and allows the water vapor to exchange heat with the cooling medium in the heat exchange pool 21 so as to convert the water vapor into condensate; and the condensate drain pipe 25, which extracts the condensate from the heat exchanger 22 and guides and discharges the condensate at the reactor pressure vessel 12. Accordingly, the water vapor produced in the dry well 15 as described above undergoes a heat exchange process and becomes condensate, and the condensate is discharged around the reactor pressure vessel 12. The discharged condensate efficiently removes decay heat generated by radioactive nuclides attached to the reactor pressure vessel 12, thus suppressing increase in the temperature of the atmosphere in the dry well 15 due to the decay heat. As a result, the temperature of the water vapor and gases introduced into the reactor containment vessel cooling system 20 can be lowered, and degradation in cooling capability and structural integrity of the reactor containment vessel cooling system 20 can be suppressed.
(2) Since the condensate drain pipe 25 discharges condensate from a position above the reactor shielding wall 13 at the side surface of the thermally insulating member 19, the condensate flows down along the side surface of the thermally insulating member 19. As a result, the condensate can indirectly absorb the heat accumulated in the thermally insulating member 19, that is, decay heat generated by radioactive nuclides attached to the reactor pressure vessel 12 over a wide area of the thermally insulating member 19.

The condensate that has not evaporated but has been left in the process, in which the condensate flows down the thermally insulating member, 19 is accumulated between the reactor shielding wall 13 and the thermally insulating member 19 and overflows through an opening 13a for inter-pipe communication, such as a recirculation nozzle provided through the reactor shielding wall 13. The overflow condensate absorbs the decay heat and becomes water vapor, which passes through the vent tube 18, eventually flows into the suppression pool 17, at which a part of the water vapor is cooled and condensed, and the rest of the water vapor travels to the upper dry well 15a and enters the heat exchanger 22.

It has been known that the concentration of the ratio of the volume (ratio of partial pressure) of a noncondensable gas introduced into the heat exchanger 22 to the volume of the atmosphere correlates with the heat exchanging capability of the heat exchanger 22, and that the heat exchanging capability of the heat exchanger 22 decreases as the proportion of the partial pressure of the noncondensable gas increases. Fig. 4 shows a graph illustrating the relationship between the proportion of the partial pressure of a noncondensable gas (ratio of noncondensable gas partial pressure to atmospheric pressure) and a degradation factor (index representing relative performance) of a heat exchange-type reactor containment vessel cooling system shown in Non-Patent Document 1.

In the reactor containment vessel cooling system 20, since the decay heat generated by radioactive nuclides attached to the reactor pressure vessel 12 efficiently evaporates condensate, the proportion of water vapor in the upper dry well 15a is greater than that in the lower dry well 15b. Therefore, the proportion of the partial pressure of a noncondensable gas in the upper dry well 15a is lower than that in the lower dry well 15b. The reactor containment vessel cooling system 20 primarily extracts water vapor from the upper dry well 15a, where the proportion of the partial pressure of the noncondensable gas is relatively small, thus suppressing the decreasing in heat exchange capability of the heat exchanger 22, that is, decreasing in cooling capability of the reactor containment vessel cooling system 20.
(3) The condensate drain pipe 25 includes the ring-shaped header tube 26, which circumferentially surrounds the thermally insulating member 19 and through which condensate flows, and the plurality of condensate discharge ports 27 provided at intervals along the header tube 26 in the circumferential direction thereof. As a result, the advantageous effect (2) described above is provided without any change in the structure of the thermally insulating member 19 or without degradation of the thermally insulating performance of the thermally insulating member 19 required during normal operation of the reactor.

### (Second Embodiment)

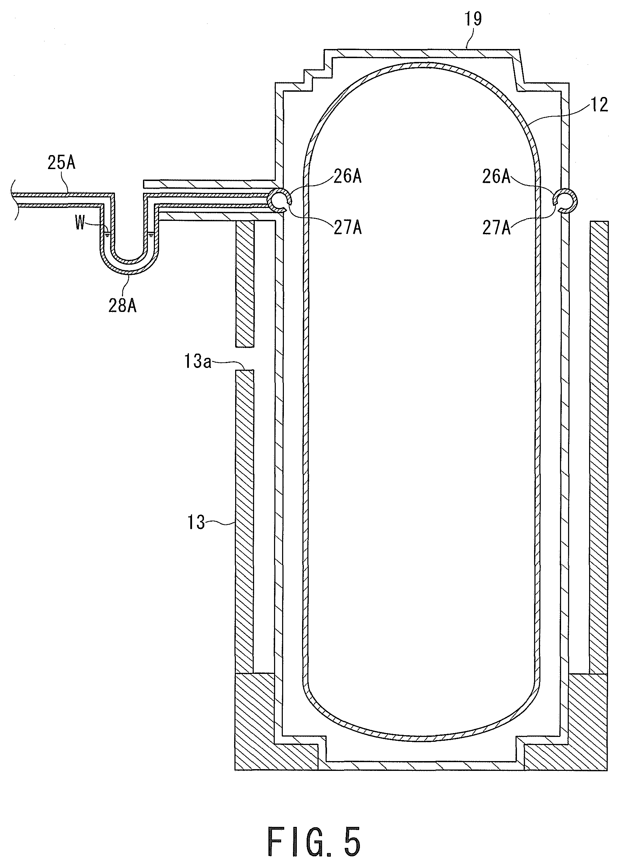

Fig. 5 is an enlarged sectional view of a key portion showing a second embodiment of the reactor containment vessel cooling system according to the present invention. The present embodiment is an example in which the condensate drain pipe 25 in the reactor containment vessel cooling system 20 in the first embodiment is configured differently. In the following descriptions, components or members similar to those in the first embodiment are added with the same reference numerals, and components different from those in the first embodiment or added thereto are labeled with "A" in the following description.

A condensate drain pipe 25A in the present embodiment includes a header tube 26A.

The header tube 26A is formed of a ring-shaped pipe through which condensate extracted from the heat exchanger 22 (see Fig. 1) flows, as in the first embodiment, but is embedded in the thermally insulating member 19 and circumferentially surrounds the reactor pressure vessel 12.

The header tube 26A has a plurality of discharge ports 27A provided at intervals along the circumferential direction of the header tube 26A. The angle and layout of the discharge ports 27A are arranged so as to face the gap formed between the reactor pressure vessel 12 and the thermally insulating member 19 and to discharge the condensate flowing through the header tube 26A at the side surface of the reactor pressure vessel 12.

The condensate drain pipe 25A further includes a folded portion (bent portion) 28A, as shown in Fig. 5. The folded portion 28A is a downwardly convex curved tube that replaces a portion of the condensate drain pipe 25A and holds water therein during the normal operation of the reactor. The curved tube is formed of a U-shaped or V-shaped tube. The symbol W in Fig. 5 represents a water surface.

The reactor containment vessel cooling system 20A can provide not only the advantageous effect (1) provided in the first embodiment but also the following advantageous effects (4) to (6).
(4) Since the condensate drain pipe 25A discharges condensate at the side surface of the reactor pressure vessel 12 instead of the thermally insulating member 19, the condensate flows down along the side surface of the reactor pressure vessel 12. As a result, the condensate directly absorbs the decay heat generated by the radioactive nuclides attached to the reactor pressure vessel 12, whereby the advantageous effect (1) provided in the first embodiment is enhanced. The condensate flowing down along the reactor pressure vessel 12 travels, for example, through the gap between guide tubes (not shown) of a control rod drive mechanism into the lower dry well 15b (see Fig. 1), where the condensate becomes water vapor. The water vapor originating from the condensate passes through the vent tube 18 and eventually flows into the suppression pool 17, where a part of the water vapor is cooled and condensed, and the rest of the water vapor travels to the upper dry well 15a and enters into the heat exchanger 22.
(5) Since the header tube of the condensate drain pipe 25A is embedded in the thermally insulating member 19, any structural gap between the condensate drain pipe 25A and the thermally insulating member 19 is unlikely created. As a result, the condensate can be directly discharged at the reactor pressure vessel 12 without degradation of the capability of thermally insulating the reactor pressure vessel 12 during the normal operation of the reactor.
(6) A part of the condensate drain pipe 25A is replaced with the U-shaped tube having a convexly downward shape, and water is held in the U-shaped tube. The water held in the U-shaped tube works as a barrier, which substantially prevents the atmosphere gas with which the structural space between the reactor pressure vessel 12 and the thermally insulating member 19 from traveling toward the upstream side of the condensate drain pipe 25A. That is, the heat accumulated between the reactor pressure vessel 12 and the thermally insulating member 19 unlikely leaks through the condensate drain pipe 25A. As a result, condensate can be directly discharged at the reactor pressure vessel 12 without degradation of the capability of thermally insulating the reactor pressure vessel 12 during the normal operation of the reactor.

### (Third Embodiment)

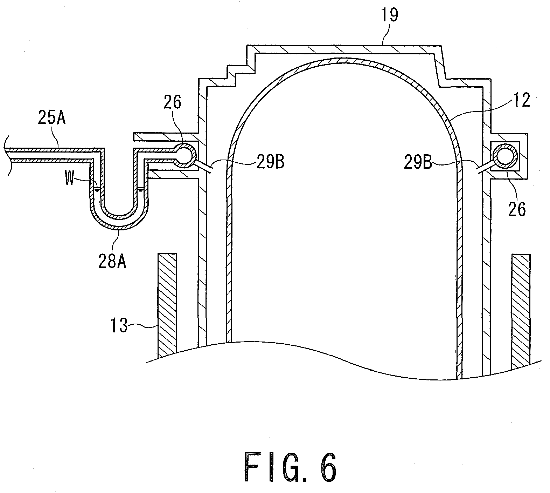

Fig. 6 is an enlarged sectional view of an essential portion representing a third embodiment of the reactor containment vessel cooling system 20B according to the present invention. The present embodiment is an example in which the condensate discharge ports 27A in the reactor containment vessel cooling system 20A in the second embodiment are configured differently. In the following descriptions, components or members similar to those in the second embodiment are added with the same reference numerals, and components different from those in the second embodiment or added thereto are labeled with "B" in the following description.

The reactor containment vessel cooling system 20B includes nozzles 29B, as shown in Fig. 6. Each of the nozzles 29B extends from the edge of the corresponding discharge port 27A (see Fig. 5) in the second embodiment and forms a discharge portion through which the condensate extracted from the heat exchanger 22 (see Fig. 1) is discharged.

The nozzles 29 are so provided that they penetrate through the thermally insulating member 19 from outside to inside, and the angle of the nozzles 29 are arranged so as to discharge the condensate at the side surface of a reactor pressure vessel 12. The tube wall of each of the nozzles 29B is in close contact with the thermally insulating member 19.

The reactor containment vessel cooling system 20B can provide not only the advantageous effect (1) provided in the first embodiment and the advantageous effects (4) to (6) provided in the second embodiment but also the following advantageous effect (7).

(7) The discharge ports of the condensate drain pipe 25B are formed of the nozzles 29B, which penetrate through the thermally insulating member that surrounds the reactor pressure vessel 12 from outside to inside. That is, in the configuration in which the condensate is directly discharged at the reactor pressure vessel 12, the atmosphere gas with which the structural space between the reactor pressure vessel 12 and the thermally insulating member 19 is filled unlikely leaks out of the thermally insulating member 19. As a result, the condensate can be directly discharged at the reactor pressure vessel 12 without degradation of the capability of thermally insulating the reactor pressure vessel 12 during the normal operation of the reactor.

The reactor containment vessels, the reactor containment vessel cooling system, and the reactor containment vessel cooling methods according to the present invention have been described above with reference to the three embodiments. Specific configurations are, however, not limited to those in the embodiments, but changes, additions, and other modifications in design may be made to the extent as far as departing from the subjects of the present invention set forth in the claims.

For example, although the first embodiment has been described with reference to the case where the condensate drain pipe is used to discharge condensate at the side surface of the thermally insulating member, the condensate may alternatively be discharged at the top surface of the thermally insulating member. Furthermore, although the second and third embodiments have been described with reference to the case where the condensate drain pipe is used to discharge condensate at the side surface of the reactor pressure vessel, the condensate may alternatively be discharged at the top of the reactor pressure vessel. In this configuration, the condensate flows over a wider area of the reactor pressure vessel, whereby decay heat held by the reactor pressure vessel can be more effectively removed.

Moreover, although the second embodiment has been described with reference to the case where water is held in the curved tube (such as U-shaped tube) during normal operation of the reactor, water is not necessarily held in the U-shaped tube because the thermal stratification that occurs in the U-shaped tube prevents the atmosphere gas between the reactor pressure vessel and the thermally insulating member from traveling to the upstream side of the U-shaped tube.

## Claims

1. A reactor containment vessel (10) comprising:
a reactor pressure vessel (12) that accommodates a core (11);
a reactor shielding wall (13) provided to surround an outer circumferential surface of the reactor pressure vessel (12);
a dry well (15) that forms a space that accommodates the reactor pressure vessel (12);
a suppression chamber (16) for controlling an internal pressure in the reactor containment vessel (10); and
a reactor containment vessel cooling system (20) for cooling the reactor containment vessel (10) by acquiring the water vapor in the reactor containment vessel (10) and by using water vapor pressure in the vessel (10) as a drive force to thereby condense the acquired water vapor into condensate and cool the reactor containment vessel with the condensate, the cooling system (20) comprising:
a heat exchange pool (21) that is arranged apart from the dry well (15a, 15b) and the suppression chamber (16) in the reactor containment vessel and stores a medium for cooling acquired water vapor;
a heat exchanger (22) that is immersed in the heat exchange pool (21), is configured to acquire water vapor from the dry well (15) in the reactor containment vessel (10), and is configured to perform heat exchange between the water vapor and the cooling medium in the heat exchange pool (21) so as to convert the water vapor into condensate;
a water vapor sucking tube (23) extending from the heat exchanger (22); and
a condensate drain pipe (25) that is further provided for the heat exchanger (22) so as to extract the condensate from the heat exchanger (22),
**characterized in that**
the condensate drain pipe (25) is either configured to guide and discharge the condensate at the side surface or at the top of a reactor pressure vessel (12), or configured to discharge the condensate at the side surface or at the top of a thermally insulating member (19) that surrounds the reactor pressure vessel (12).

2. The reactor containment vessel (10) according to claim 1, wherein the condensate drain pipe (25) is configured to discharge the condensate from a position above the reactor shielding wall (13) provided outside the thermally insulating member (19) at the side surface of the thermally insulating member (19).

3. The reactor containment vessel (10) according to claim 2, wherein the condensate drain pipe (25) includes a ring-shaped header tube (26) which circumferentially surrounds the thermally insulating member (19) and through which the condensate flows and a plurality of condensate discharge ports (27) provided at intervals along the header tube (26) in a circumferential direction thereof.

4. The reactor containment vessel (10) according to claim 1, wherein the condensate drain pipe (25A) is configured to discharge the condensate in a way that the condensate flows down along the side surface of the reactor pressure vessel (12).

5. The reactor containment vessel (10) according to claim 4, wherein the condensate drain pipe (25A) is configured to discharge the condensate from a position above the reactor shielding wall (13) at the side surface of the reactor pressure vessel (12).

6. The reactor containment vessel (10) according to claim 5, wherein the condensate drain pipe (25A) includes a ring-shaped header tube (26A) which circumferentially surrounds the reactor pressure vessel (12) and through which the condensate flows and a plurality of discharge ports (27A) which are provided at intervals along the header tube (26) in a circumferential direction thereof and through which the condensate is discharged.

7. The reactor containment vessel (10) according to claim 6, wherein each of the discharge ports (27A) is formed of a nozzle (29B) penetrating the thermally insulating member (19) that surrounds the reactor pressure vessel (12) from outside to inside.

8. The reactor containment vessel (10) according to claim 6, wherein the header tube (26A) is embedded in the thermally insulating member (19).

9. The reactor containment vessel (10) according to any one of claims 1 to 8, wherein a part of the condensate drain pipe (25A) is replaced with a curved tube (28A) having a downwardly convex shape.

10. A reactor containment vessel (10) cooling method for cooling an interior of the reactor containment vessel (10) by acquiring water vapor in a reactor containment vessel (10) and by using water vapor pressure in the vessel (10) to thereby condense the acquired water vapor into condensate and cool an internal space of the reactor containment vessel (10) with the condensate, the cooling method comprising:
storing water vapor cooling medium in a position set apart from a dry well (15) and a suppression chamber (16) in the reactor containment vessel (10); and
acquiring water vapor from the dry well (15) in the reactor containment vessel (10), performing heat exchange between the water vapor and the cooling medium so as to convert the water vapor into condensate, and guiding and discharging the condensate at the side surface or at the top of a reactor pressure vessel (12).

## Patentansprüche

1. Reaktorsicherheitsbehälter (10) mit:
einem Reaktordruckbehälter (12), der einen Kern (11) aufnimmt;
einer Reaktorabschirmwand (13), die zum Umgeben einer äußeren Umfangsoberfläche des Reaktordruckbehälters (12) vorgesehen ist;
einem Reaktorsicherheitsraum (15), der einen Raum bildet, der den Reaktordruckbehälter (12) aufnimmt;
einer Unterdrückungskammer (16) zum Steuern eines Innendrucks in dem Reaktorsicherheitsbehälter (10); und
einem Reaktorsicherheitsbehälterkühlsystem (20) zum Kühlen des Reaktorsicherheitsbehälters (10) durch Aufnehmen des Wasserdampfs in dem Reaktorsicherheitsbehälter (10) und durch Verwenden von Wasserdampfdruck in dem Behälter (10) als eine Antriebskraft, so dass es dadurch den aufgenommenen Wasserdampf in Kondensat kondensiert und den Reaktorsicherheitsbehälter mit dem Kondensat kühlt, bei dem das Kühlsystem (20):
ein Wärmetauschbecken (21), das getrennt von dem Reaktorsicherheitsraum (15a, 15b) und der Unterdrückungskammer (16) in dem Reaktorsicherheitsbehälter angeordnet ist und ein Medium zum Kühlen aufgenommenen Wasserdampfs speichert;
einen Wärmetauscher (22), der in das Wärmetauschbecken (21) eingetaucht ist, dazu ausgebildet ist, Wasserdampf aus dem Reaktorsicherheitsraum (15) in dem Reaktorsicherheitsbehälter (10) aufzunehmen, und dazu ausgebildet ist, Wärmeaustausch zwischen dem Wasserdampf und dem kühlenden Medium in dem Wärmetauschbecken (21) durchzuführen, so dass er den Wasserdampf in Kondensat umwandelt;
ein Wasserdampfansaugrohr (23), das sich von dem Wärmetauscher (22) erstreckt; und
ein Kondensatabflussrohr (25), das ferner für den Wärmetauscher (22) vorgesehen ist, so dass es das Kondensat aus dem Wärmetauscher (22) entnimmt, aufweist,
**dadurch gekennzeichnet, dass**
das Kondensatabflussrohr (25) entweder dazu ausgebildet ist, das Kondensat an der seitlichen Oberfläche oder an der Oberseite eines Reaktordruckbehälters (12) zu führen und abzulassen, oder dazu ausgebildet ist, das Kondensat an der seitlichen Oberfläche oder an der Oberseite eines thermisch isolierenden Bauteils (19), das den Reaktordruckbehälter (12) umgibt, abzulassen.

2. Reaktorsicherheitsbehälter (10) nach Anspruch 1, bei dem das Kondensatabflussrohr (25) dazu ausgebildet ist, das Kondensat von einer Position über der Reaktorabschirmwand (13), die außerhalb des thermisch isolierenden Bauteils (19) vorgesehen ist, an der seitlichen Oberfläche des thermisch isolierenden Bauteils (19) abzulassen.

3. Reaktorsicherheitsbehälter (10) nach Anspruch 2, bei dem das Kondensatabflussrohr (25) eine ringförmige Kopfröhre (26), die das thermisch isolierende Bauteil (19) umlaufend umgibt und durch die das Kondensat fließt, und eine Mehrzahl von Kondensatablassöffnungen (27), die in Abständen entlang der Kopfröhre (26) in einer Umfangsrichtung davon vorgesehen sind, aufweist.

4. Reaktorsicherheitsbehälter (10) nach Anspruch 1, bei dem das Kondensatabflussrohr (25A) dazu ausgebildet ist, das Kondensat in einer Weise abzulassen, dass das Kondensat entlang der seitlichen Oberfläche des Reaktordruckbehälters (12) herabfließt.

5. Reaktorsicherheitsbehälter (10) nach Anspruch 4, bei dem das Kondensatabflussrohr (25A) dazu ausgebildet ist, das Kondensat von einer Position über der Reaktorabschirmwand (13) an der seitlichen Oberfläche des Reaktordruckbehälters (12) abzulassen.

6. Reaktorsicherheitsbehälter (10) nach Anspruch 5, bei dem das Kondensatabflussrohr (25A) eine ringförmige Kopfröhre (26A), die den Reaktordruckbehälter (12) umlaufend umgibt und durch die das Kondensat fließt, und eine Mehrzahl von Ablassöffnungen (27A), die in Abständen entlang der Kopfröhre (26) in einer Umfangsrichtung davon vorgesehen sind und durch die das Kondensat abgelassen wird, aufweist.

7. Reaktorsicherheitsbehälter (10) nach Anspruch 6, bei dem jede der Ablassöffnungen (27A) aus einem Stutzen (29B), der das thermisch isolierende Bauteil (19), das den Reaktordruckbehälter (12) umgibt, von außen nach innen durchdringt, ausgebildet ist.

8. Reaktorsicherheitsbehälter (10) nach Anspruch 6, bei dem die Kopfröhre (26A) in das thermisch isolierende Bauteil (19) eingebettet ist.

9. Reaktorsicherheitsbehälter (10) nach einem der Ansprüche 1 bis 8, bei dem ein Teil des Kondensatabflussrohrs (25A) durch eine gekrümmte Röhre (28A) mit einer nach unten konvexen Form ersetzt ist.

10. Reaktorsicherheitsbehälter(10)-Kühlverfahren zum Kühlen eines Inneren des Reaktorsicherheitsbehälters (10) durch Aufnehmen von Wasserdampf in einem Reaktorsicherheitsbehälter (10) und durch Verwenden von Wasserdampfdruck in dem Behälter (10), so dass dadurch der aufgenommene Wasserdampf in Kondensat kondensiert wird und ein Innenraum des Reaktorsicherheitsbehälters (10) mit dem Kondensat gekühlt wird, mit:
Speichern von Wasserdampfkühlmedium in einer Position, die getrennt von einem Reaktorsicherheitsraum (15) und einer Unterdrückungskammer (16) in den Reaktorsicherheitsbehälter (10) festgelegt ist; und
Aufnehmen von Wasserdampf aus dem Reaktorsicherheitsraum (15) in dem Reaktorsicherheitsbehälter (10), Durchführen von Wärmeaustausch zwischen dem Wasserdampf und dem Kühlmedium, so dass der Wasserdampf in Kondensat umgewandelt wird, und Führen und Ablassen des Kondensats an der seitlichen Oberfläche oder an der Oberseite eines Reaktordruckbehälters (12).

## Revendications

1. Enceinte de confinement de réacteur (10) comprenant :
un caisson résistant (12) du réacteur qui reçoit un coeur (11) ;
une paroi de protection (13) du réacteur aménagée pour entourer la surface circonférentielle externe du caisson résistant (12) du réacteur ;
une enveloppe de sécurité (15) qui forme un espace qui abrite le caisson résistant (12) du réacteur ;
une chambre de suppression (16) pour commander la pression interne dans l'enceinte de confinement (10) du réacteur ; et
un système de refroidissement (20) de l'enceinte de confinement du réacteur pour refroidir l'enceinte de confinement (10) du réacteur par acquisition de vapeur d'eau dans l'enceinte de confinement (10) du réacteur et utilisation de la pression de la vapeur d'eau dans l'enceinte (10) comme force d'entraînement pour ainsi condenser la vapeur d'eau acquise en condensat et refroidir l'enceinte de confinement du réacteur avec le condensat, le système de refroidissement (20) comprenant :
une piscine d'échange de chaleur (21) qui est aménagée séparément de l'enveloppe de sécurité (15a, 15b) et de la chambre de suppression (16) dans l'enceinte de confinement du réacteur et stocke un agent pour refroidir la vapeur d'eau acquise ;
un échangeur de chaleur (22) qui est immergé dans la piscine d'échange de chaleur (21), est configuré pour acquérir de la vapeur d'eau de l'enveloppe de sécurité (15) dans l'enceinte de confinement (10) du réacteur et est configuré pour effectuer un échange de chaleur entre la vapeur d'eau et l'agent de refroidissement dans la piscine d'échange de chaleur (21) de manière à convertir la vapeur d'eau en condensat ;
un tube d'aspiration de vapeur d'eau (23) s'étendant de l'échangeur de chaleur (22) ; et
un tuyau de drainage de condensat (25) qui est en outre prévu pour l'échangeur de chaleur (22) de manière à extraire le condensat de l'échangeur de chaleur (22),
**caractérisé en ce que** :
le tuyau de drainage de condensat (25) est configuré pour guider et décharger le condensat sur la surface latérale ou au sommet d'un caisson résistant (12) du réacteur ou configuré pour décharger le condensat sur la surface latérale ou au sommet d'un élément thermo-isolant (19) qui entoure le caisson résistant (12) du réacteur.

2. Enceinte de confinement de réacteur (10) selon la revendication 1, dans laquelle le tuyau de drainage de condensat (25) est configuré pour décharger le condensat d'une position sise au-dessus de la paroi de protection (13) du réacteur à l'extérieur de l'élément thermo-isolant (19) sur la surface latérale de l'élément thermo-isolant (19).

3. Enceinte de confinement de réacteur (10) selon la revendication 2, dans laquelle le tuyau de drainage de condensat (25) comprend un tube collecteur de forme annulaire (26) qui entoure sur la circonférence l'élément thermo-isolant (19) et à travers lequel le condensat s'écoule et une pluralité d'orifices de décharge de condensat (27) ménagés à intervalles le long du tube collecteur (26) dans sa direction circonférentielle.

4. Enceinte de confinement de réacteur (10) selon la revendication 1, dans laquelle le tuyau de drainage de condensat (25A) est configuré pour décharger le condensat de manière que le condensat descende le long de la surface latérale du caisson résistant (12) du réacteur.

5. Enceinte de confinement de réacteur (10) selon la revendication 4, dans laquelle le tuyau de drainage de condensat (25A) est configuré pour décharger le condensat d'une position sise au-dessus de la paroi de protection (13) du réacteur sur la surface latérale du caisson résistant (12) du réacteur.

6. Enceinte de confinement de réacteur (10) selon la revendication 5, dans laquelle le tuyau de drainage de condensat (25A) comprend un tube collecteur de forme annulaire (26A) qui entoure sur la circonférence le caisson résistant (12) du réacteur et à travers lequel le condensat s'écoule et une pluralité d'orifices de décharge (27A) qui sont ménagés à intervalles le long du tube collecteur (26) dans sa direction circonférentielle et à travers lesquels le condensat est déchargé.

7. Enceinte de confinement de réacteur (10) selon la revendication 6, dans laquelle chacun des orifices de décharge (27A) est formé d'une buse (29B) pénétrant dans l'élément thermo-isolant (19) qui entoure le caisson résistant (12) du réacteur de l'extérieur à l'intérieur.

8. Enceinte de confinement de réacteur (10) selon la revendication 6, dans laquelle le tube collecteur (26A) est imbriqué dans l'élément thermo-isolant (19).

9. Enceinte de confinement de réacteur (10) selon l'une quelconque des revendications 1 à 8, dans laquelle une partie du tuyau de drainage de condensat (24A) est remplacée par un tube incurvé (28A) ayant une forme convexe vers le bas.

10. Procédé de refroidissement d'une enceinte de confinement de réacteur (10) pour refroidir l'intérieur de l'enceinte de confinement (10) du réacteur par acquisition de vapeur d'eau dans une enceinte de confinement (10) du réacteur et utilisation de la pression de la vapeur d'eau dans l'enceinte (10) pour ainsi condenser la vapeur d'eau acquise en condensat et refroidir l'espace interne de l'enceinte de confinement (10) du réacteur par le condensat, le procédé de refroidissement comprenant les étapes consistant à :
stocker un agent de refroidissement de la vapeur d'eau dans une position sise séparément d'une enveloppe de sécurité (15) et d'une chambre de suppression (16) dans l'enceinte de confinement (10) du réacteur ; et
acquérir de la vapeur d'eau de l'enveloppe de sécurité (15) dans l'enceinte de confinement (10) du réacteur, effectuer un échange de chaleur entre la vapeur d'eau et l'agent de refroidissement de manière à convertir la vapeur d'eau en condensat et guider et décharger le condensat sur la surface latérale ou au sommet d'un caisson résistant (12) du réacteur.
